# EUROPÄISCHE PATENTSCHRIFT

(11) **EP 3 512 660 B1**
(45) Veröffentlichungstag und Bekanntmachung des Hinweises auf die Patenterteilung: **12.02.2025**
(21) Anmeldenummer: 17765163.5
(22) Anmeldetag: 08.09.2017
(51) Int. Cl.: B23K 20/08, B23K 26/0622, B23K 26/03, B23K 31/12

(54) **VERFAHREN UND VORRICHTUNG ZUR PROZESSÜBERWACHUNG BEI EINER MITTELS KOLLISIONSSCHWEISSEN GEBILDETEN SCHWEISSNAHT**
METHOD AND DEVICE FOR MONITORING THE PROCESS FOR A WELDING SEAM FORMED BY MEANS OF COLLISION WELDING
PROCÉDÉ ET DISPOSITIF DE SURVEILLANCE DE PROCESSUS LORS DE LA FORMATION D'UN CORDON DE SOUDURE PAR SOUDAGE PAR CHOC

(30) Priorität: 16.09.2016 DE 102016217758
(43) Veröffentlichungstag der Anmeldung: 24.07.2019
(73) Patentinhaber: Fraunhofer-Gesellschaft zur Förderung der angewandten Forschung e.V., 80686 München (DE); Technische Universität Dresden, 01069 Dresden (DE)
(72) Erfinder: BELLMANN, Jörg, 01159 Dresden (DE)
(74) Vertreter: Pfenning, Meinig & Partner mbB
(86) Internationale Anmeldenummer: PCT/EP2017/072656
(87) Internationale Veröffentlichungsnummer: WO 2018/050569

(56) Entgegenhaltungen:
- WO-A2-2004/073913
- US-A- 3 737 986
- US-A1- 2004 032 597
- US-A1- 2010 133 247
- US-A1- 2013 086 961
- US-A1- 2016 074 964
- US-A1- 2016 074 964
- ALEXANDER ZIEFLE ET AL: "Schockschweissen - Verfahrensvarianten und Messverfahren zur Beurteilung der Schweissqualität", SCHWEISSEN UND SCHNEIDEN, DVS VERLAG, DUSSELDORF, DE, vol. 66, no. 12, 1 December 2014 (2014-12-01), pages 730 - 736, XP001593034, ISSN: 0036-7184

## Beschreibung

Die vorliegende Erfindung betrifft ein Verfahren und eine Vorrichtung zur Prozessüberwachung bei einer mittels Kollisionsschweißen gebildeten Schweißnaht.

Kollisionsschweißverfahren, wie beispielsweise Magnetpulsschweißen, weisen oftmals den Nachteil auf, dass eine Qualität einer ausgebildeten Schweißnaht nur mit großem Aufwand nach Beenden eines Schweißvorgangs überprüft werden kann. Insbesondere werden hierfür typischerweise weitere Untersuchungsvorrichtungen wie Ultraschallgeräte benötigt, was den gesamten Herstellungsprozess länger und somit auch kostenungünstiger macht.

Zwar sind aus dem Stand der Technik verschiedene Ansätze zur verbesserten Erfassung der physikalischen Vorgänge bei derartigen Schweißvorgängen bekannt (so zeigt beispielsweise das Paper "Numerical Simulation of Impact Welding Processes with LS-DYNA", Peter Groche, Christian Pabst, 10th European LS-DYNA Conference 2015, Würzburg, Germany, ein Verfahren zur numerischen Simulation solcher Schweißvorgänge), jedoch ist es bislang nicht möglich, während des eigentlichen Schweißvorgangs eine Qualitätskontrolle vorzunehmen. WO 2004/073913 A2 offenbart den Oberbegriff der Ansprüche 1 und 6.

Der vorliegenden Erfindung liegt damit die Aufgabe zugrunde, ein Verfahren und eine Vorrichtung zu entwickeln, die die genannten Nachteile vermeiden, mit denen also eine Überwachung einer beim Kollisionsschweißen sich ausbildenden Schweißnaht während eines Schweißvorgang möglich ist.

Diese Aufgabe wird erfindungsgemäß gelöst durch ein Verfahren nach Anspruch 1 und einer Vorrichtung nach Anspruch 6. Vorteilhafte Ausgestaltungen und Weiterbildungen sind in den abhängigen Ansprüchen enthalten.

Ein Verfahren zur Prozessüberwachung bei einer mittels Kollisionsschweißen gebildete Schweißnaht weist einen Schritt auf, bei dem ein erster Fügepartner und ein zweiter Fügepartner durch einen Energieeintrag aufeinander zu beschleunigt und unter Ausbilden der Schweißnaht miteinander verschweißt werden. Durch eine zeitaufgelöst messende optische Aufnahmeeinheit mit mindestens einem Detektor wird beim Verschweißen ein Lichtblitz zwischen dem ersten Fügepartner und dem zweiten Fügepartner detektiert. Durch eine Auswerteeinheit wird ein Ist-Wert eines Beginns des Lichtblitzes, einer Dauer des Lichtblitzes, einer Intensität des Lichtblitzes und bzw. oder einer zeitlichen Intensitätsverteilung des Lichtblitzes ermittelt und mit einem jeweiligen SollWert des Beginns des Lichtblitzes, der Dauer des Lichtblitzes, der Intensität des Lichtblitzes und bzw. oder der zeitlichen Intensitätsverteilung des Lichtblitzes verglichen. Nur bei Einhalten einer Maximalabweichung des Ist-Werts von dem Soll-Wert soll die Schweißnaht als qualitativ ausreichend qualifiziert werden.

Durch das beschriebene Verfahren ist in kostengünstiger und zerstörungsfreier Weise während des Durchführens des Schweißvorgangs eine Kontrolle der ausgebildeten Schweißnaht möglich, da der üblicherweise beobachtete Lichtblitz, der auch als Lichtentladung bezeichnet wird, Rückschlüsse auf die Qualität des Schweißvorgangs erlaubt. Überraschenderweise kann nämlich durch den Beginn und den Verlauf des Lichtblitzes darauf geschlossen werden, ob die Schweißnaht wie gewünscht ausgebildet wurde. Der Lichtblitz wird zunächst durch elektromagnetische Strahlung eines kurzzeitigen (etwa für eine 1 µs andauernden), heißen und dichten Plasmas verursacht, gefolgt von länger andauernder elektromagnetischer Strahlung eines aus einer Fügezone expandierenden Gases gemischt mit glühend leuchtenden Bestandteilen der beiden Fügepartner. Durch einen Vergleich des Soll-Werts des Beginns des Lichtblitzes mit einem Ist-Wert des Beginns des Lichtblitzes ist es somit möglich, ohne weitere Messinstrumente oder eine nachgelagerte Qualitätskontrolle die Qualität der ausgebildeten Schweißnaht zu bestimmen. Alternativ oder zusätzlich kann auch die Dauer des Lichtblitzes durch die zeitaufgelöst messende optische Aufnahmeeinheit ermittelt werden und dieser Ist-Wert mit dem Soll-Wert abgeglichen werden. Schließlich ist dies alternativ oder zusätzlich auch mit der Intensität des Lichtblitzes als Ist-Wert und Soll-Wert möglich. Ebenso kann auch die zeitliche Intensitätsverteilung als Ist-Wert genommen und mit dem entsprechenden Soll-Wert verglichen werden. Typischerweise wird nur eines der vier genannten Maße für die Klassifizierung verwendet, es ist aber auch möglich, mehr als eines bzw. alle vier der genannten Maße, also den Beginn des Lichtblitzes, die Dauer des Lichtblitzes, die Intensität des Lichtblitzes und die zeitliche Intensitätsverteilung des Lichtblitzes für die Klassifizierung hinsichtlich einer ausreichenden Qualität der Schweißnaht heranzuziehen.

Es kann vorgesehen sein, dass durch eine Sortiereinheit nur aus dem ersten Fügepartner und dem zweiten Fügepartner durch das Kollisionsschweißen gebildete Bauteile mit einer qualitativ ausreichend klassifizierten Schweißnaht einer weiteren Verarbeitung zugeführt werden. Dies garantiert, dass Bauteile mit einer fehlerhaften Schweißnaht sofort aussortiert werden und somit das Füge- und Prüfverfahren mit hoher Effizienz durchgeführt werden kann.

Als das Kollisionsschweißen kann Magnetpulsschweißen, Sprengschweißen, Wasserstrahl-Punkt-Schweißen, Schweißen durch Fügepartnerbeschleunigung mittels vaporisierender Folien und bzw. oder Schweißen durch Fügepartnerbeschleunigung mittels laserinduzierter Schockwellen durchgeführt werden.

Die Abweichung des Ist-Werts vom Soll-Wert, die eingehalten werden soll für einen qualitativ ausreichenden Schweißnaht, kann vorgegeben werden, es kann jedoch auch vorgesehen sein, diese Abweichung über ein statistisches Maß anhand mehrerer durchgeführter und qualitativ bewerteter Schweißvorgänge festzulegen. Diese können sowohl innerhalb als auch außerhalb eines Prozessfensters erfolgen, um sowohl den Beginn des Lichtblitzes, die Dauer des Lichtblitzes, die Intensität des Lichtblitzes und bzw. oder die zeitliche Intensitätsverteilung des Lichtblitzes sowohl qualitativ ausreichender als auch qualitativ nicht ausreichender Schweißnähte zu erfassen. Vorzugsweise ist das statistische Maß die Standardabweichung, besonders vorzugsweise ein Zweifaches der Standardabweichung, d.h. bei einer Abweichung die größer als die Standardabweichung bzw. die zweifache Standardabweichung, wird die Schweißnaht als nicht mehr qualitativ ausreichend klassifiziert.

Der Lichtblitz wird typischerweise von einem einzelnen Detektor der zeitaufgelöst messenden optischen Aufnahmeeinheit erfasst, er kann aber auch von mindestens zwei Detektoren der optischen Aufnahmeeinheit aus mindestens zwei verschiedenen Raumpositionen erfasst werden, wobei nur bei der Einhaltung der maximalen Abweichung des Ist-Werts von dem Soll-Werts in allen Detektoren die Schweißnaht als qualitativ ausreichend klassifiziert wird. Die beiden Detektoren können hierbei sowohl den Beginn des Lichtblitzes, die Dauer des Lichtblitzes, die Intensität des Lichtblitzes und bzw. oder die zeitliche Intensitätsverteilung des Lichtblitzes detektieren, es kann jedoch auch vorgesehen sein, dass einer der beiden Detektoren eines der genannten vier Maße detektiert und der weitere Detektor ein anderes der genannten vier Maße. Durch die Verwendung von zwei Detektoren wird die Redundanz und somit die Zuverlässigkeit des durchzuführendes Verfahrens erhöht. Die Soll-Werte verschiedener Detektoren müssen nicht identisch sein, sondern können voneinander verschieden sein und an eine Fügestellengestaltung angepasst werden.

Eine Vorrichtung zur Prozessüberwachung bei einer mittels Kollisionsschweißen gebildeten Schweißnaht weist eine Schweißeinheit zum Beschleunigen und Verschweißen eines ersten Fügepartner und eines zweiten Fügepartners durch einen Energieeintrag unter Ausbildung der Schweißnaht auf. Die Vorrichtung weist außerdem eine zeitaufgelöst messende optische Aufnahmeeinheit mit mindestens einem Detektor zum Detektieren eines beim Verschweißen generierten Lichtblitzes zwischen dem ersten Fügepartner und dem zweiten Fügepartner und einer Auswerteeinheit zum Ermitteln eines IstWerts eines Beginns des Lichtblitzes, einer Dauer des Lichtblitzes, einer Intensität des Lichtblitzes und bzw. oder einer zeitlichen Intensitätsverteilung des Lichtblitzes auf. Die Auswerteeinheit ist außerdem zum Vergleichen des jeweiligen ermittelten Ist-Werts mit einem jeweiligen Soll-Wert des Beginns des Lichtblitzes, der Dauer des Lichtblitzes, der Intensität des Lichtblitzes und bzw. oder einer zeitlichen Intensitätsverteilung des Lichtblitzes ausgebildet, wobei die Auswerteeinheit eingerichtet ist, nur bei Einhalten der maximalen Abweichung des Ist-Werts von dem Soll-Wert die Schweißnaht aus qualitativ ausreichend zu klassifizieren.

Durch das Einhalten der maximalen Abweichung des Ist-Werts von dem SollWert, d.h. indem kontrolliert wird, ob der tatsächlich festgestellte Ist-Wert nahe genug an dem theoretisch für eine qualitativ hochwertige Schweißnaht benötigten Soll-Wert liegt, wird eine zuverlässige und effiziente Kontrolle der Schweißnahtausbildung ermöglicht.

Typischerweise ist eine Sortiereinheit vorgesehen, die ausgebildet ist, nur Bauteile mit einer als qualitativ ausreichend klassifizierten Schweißnaht einer weiteren Verarbeitung zuzuführen, so dass in und mit einer einzigen Vorrichtung sowohl eine Qualitätskontrolle bzw. Prozessüberwachung und eine geeignete Weiterverarbeitung der aus dem ersten Fügepartner und dem zweiten Fügepartner durch den Schweißvorgang gebildeten Bauteile möglich ist.

Um eine ausreichend schnelle Datenerfassung zu ermöglichen, kann die optische Aufnahmeeinheit mit einer Bildaufzeichnungsfrequenz von mind. 1 MHz ausgebildet sein, d.h. als kontinuierlich messende Aufnahmeeinheit vorliegen. Eine Beschleunigung der beiden Fügepartner dauert üblicherweise 10 µs, der Lichtblitz ca. 100 µs. Es ist vorteilhaft, wenn mindestens ein Datenpunkt pro Mikrosekunde vorliegt.

Typischerweise ist die optische Aufnahmeeinheit bzw. mindestens ein Detektor der optischen Aufnahmeeinheit in Form einer Fotozelle, eines Fotomultipliers, einer Fotodiode, eines Fototransistors und bzw. oder eines Fotowiderstands ausgebildet, um zuverlässig und schnell Aufnahmen des Schweißvorgangs und des sich dabei ausgebildeten Lichtblitzes zu erhalten. Dem Detektor in der optischen Aufnahmeeinheit vorgeschaltet können optische Zuleitungen wie Lichtwellenleitkabel oder reflektierende Flächen sein, um eine räumliche Trennung zwischen einem Erfassungspunkt des Lichtblitzes und einer Umwandlung in ein Messsignal zu realisieren.

Die optische Aufnahmeeinheit kann mindestens zwei Detektoren aufweisen, die ausgebildete sind, den Lichtblitz aus mindestens zwei verschiedenen Raumpositionen zu erfassen, wobei die Auswerteeinheit eingerichtet ist, nur bei Einhaltung einer maximalen Abweichung des Ist-Werts von dem Soll-Wert an der Mehrzahl, bevorzugt an allen Detektoren die Schweißnaht als qualitativ ausreichend zu klassifizieren, wobei sich die Soll-Werte eines jeden Detektors je nach Fügestellengestaltung unterscheiden können. Somit werden fehlerhafte Detektionen in ihrer Anzahl minimiert und eine Zuverlässigkeit des Verfahrens weiter erhöht.

Die beschriebene Vorrichtung ist zum Durchführen des beschriebenen Verfahrens geeignet, d. h. das Verfahren kann mit der vorgestellten Vorrichtung durchgeführt werden.

Ausführungsbeispiele der Erfindung sind in den Zeichnungen dargestellt und werden nachfolgend anhand der Figuren 1-5 erläutert.

Es zeigen:
- Fig. 1: eine schematische, seitliche Darstellung einer Vorrichtung zur Prozessüberwachung bei einer mittels Kollisionsschweißen gebildeten Schweißnaht;
- Fig. 2: eine schematische Darstellung eines Magnetpulsschweißvorgangs anhand rotationssymmetrischer Fügepartner;
- Fig. 3: eine schematische Darstellung eines laserinduzierten Schockwellen-Schweißvorgangs anhand von Blechen;
- Fig. 4: eine schematische Ansicht eines Sprengschweißvorgangs anhand einer simultanen Beschleunigung beider Fügepartner und
- Fig. 5: eine schematische Ansicht eines Schweißvorgangs mittels Fügepartnerbeschleunigung durch vaporisierende Folien.

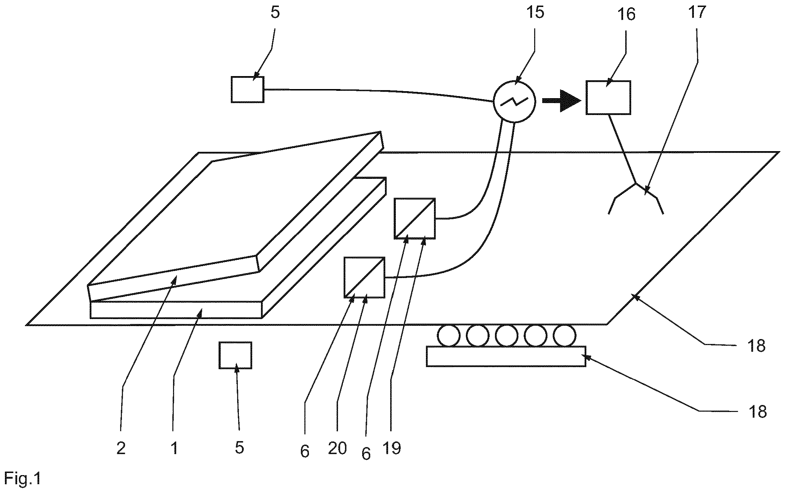

In Figur 1 ist in einer schematischen, seitlichen Ansicht ein Kollisionsschweißvorgang gezeigt. Dieser Kollisionsschweißvorgang soll eine lokal aufgelöste und zerstörungsfreie Erfassung eines Aufprallzeitpunkts und einer Schweißnahtausbildung in Echtzeit beim Schweißen mit hoher mechanischer Energie, d.h. ein Schweißvorgang im Sinne der DIN EN ISO 4063, 2011, ermöglichen, d.h. insbesondere Magnetpulsschweißen (MPW), Sprengschweißen (EXW), Kollisionsschweißvorgänge durch Bauteilbeschleunigung mittels vaporisierender Folien (Vaporizing Foil Actuator Welding VFAW), laserinduzierter Schockwellen (Laser Impact Welding LIW) und Wasserstrahlen (Water-Jet-Spot-Welding WSW) kennzeichnen.

Ein erster Fügepartner 1 und ein zweiter Fügepartner 2 werden bei allen diesen Verfahren räumlich einander benachbart und durch einen Energieeintrag unter Ausbilden der Schweißnaht miteinander verschweißt. Der Energieeintrag kann je nach Art des verwendeten Verfahrens unterschiedlich sein und beispielsweise beim Magnetpulsschweißen ein pulsförmig ausgebildetes magnetisches Feld sein. Hierfür ist in jedem der Verfahren eine Schweißeinheit 5 vorgesehen, die für den Energieeintrag auf den ersten Fügepartner 1 und bzw. oder den zweiten Fügepartner 2 zuständig ist.

Durch eine zeitaufgelöst messende optische Aufnahmeeinheit 6 mit zwei Detektoren 19 und 20 in dem in Figur 1 dargestellten Ausführungsbeispiel wird ein beim Verschweißen entstehender Lichtblitz zwischen dem ersten Fügepartner 1 und dem zweiten Fügepartner 2 detektiert, durch die überraschendenderweise Rückschlüsse auf die Qualität der ausgebildeten Schweißnaht gezogen werden können, ohne dass ein aus dem ersten Fügepartner 1 und dem zweiten Fügepartner 2 gebildetes Bauteil einer weiteren Untersuchung unterzogen werden muss.

Ein Aufzeichnungsgerät 15 empfängt sowohl ein Signal von der Schweißeinheit 5 als auch von der zeitaufgelöst messenden optischen Aufnahmeeinheit 6. Die Auswerteeinheit 16 ist mit dem Aufzeichnungsgerät 15 verbunden und ermittelt somit einen Ist-Wert eines Beginns des Lichtblitzes, einer Dauer des Lichtblitzes, einer zeitlichen Intensitätsverteilung des Lichtblitzes und bzw. oder einer Intensität des Lichtblitzes und vergleicht diese Maße mit einem jeweiligen Soll-Wert. Nur bei Einhaltung einer maximalen Abweichung des IstWerts von dem Soll-Wert wird die Schweißnaht als qualitativ ausreichend klassifiziert.

In dem in Figur 1 dargestellten Ausführungsbeispiel wird ein derartig gebildetes Bauteil auf einer Fördereinrichtung 18, beispielweise einem Laufband, weitertransportiert und es ist eine Sortiereinheit 17 vorgesehen, die ebenfalls durch die Auswerteeinheit 16 angesteuert wird, und dazu ausgebildet ist, von der Fördereinheit 18 diejenigen Bauteile zu entfernen, die den Qualitätsanforderung nicht genügen.

Die einzuhaltenden Abweichung des Ist-Werts vom Soll-Wert kann hierbei vor dem Durchführen des Verfahrens an der Auswerteinheit eingegeben werden oder von der Auswerteeinheit 16 über ein statistisches Maß, wie die Standardabweichung, anhand mehrerer durchgeführter und nachträglich ausgewerteter Schweißvorgänge festgelegt werden.

Um eine kontinuierliche Bildaufzeichnung zu gewährleisten, ist die zeitaufgelöst messende optische Aufnahmeeinheit 6 mit einer Bildaufzeichnungsfrequenz mit mindestens 1 MHz ausgebildet. Die Aufnahmeeinheit 6 kann eine Fotozelle, ein Fotomultiplier, eine Fotodiode, ein Fototransistor und bzw. oder ein Fotowiderstand sein.

Außerdem kann die zeitaufgelöst messende optische Aufnahmeeinheit 6 die gezeigten zwei Detektoren 19 und 20 aufweisen, die den Lichtblitz aus mindestens zwei verschiedenen Raumpositionen erfassen, wobei zusätzlich zu den genannten vier Maßen nur beim Einhalten einer maximalen Abweichung des Ist-Werts von dem Soll-Wert an beiden Detektoren 19, 20 die Schweißnaht als qualitativ ausreichend klassifiziert wird. Hierzu senden die beiden Detektoren 19 und 20 Signale der Lichtintensität an die Auswerteeinheit 16, üblicherweise über eine elektrische Verbindung. Die beiden Detektoren 19 und 20 müssen auch nicht identisch ausgebildet sein, so kann beispielsweise der Detektor 19 als eine Fotozelle ausgebildet sein, während der Detektor 20 ein Fotomultiplier ist. Eine Kombination des Detektors 19 bzw. des Detektors 20, der Verstärkerschaltung 14 und der Auswerteeinheit 16 ist beispielsweise durch optische Eingänge an Oszilloskopen in der Auswerteeinheit 16 möglich. In weiteren Ausführungsbeispielen kann natürlich auch nur ein einzelner Detektor in der optischen Aufnahmeeinheit 6 vorgesehen sein.

Die in Figur 1 dargestellte Vorrichtung und das damit durchzuführende Verfahren ermöglichen es, sowohl Abweichungen in Form- und Lagetoleranzen des ersten Fügepartners 1 und des zweiten Fügepartners 2 zueinander und zur Schweißeinheit 5 sowie eine unzureichende oder fehlerhafte Fixierung des ersten Fügepartners 1 und des zweiten Fügepartners 2 zu detektieren. Ferner können auch Abweichungen in den mechanischen Eigenschaften, wie dem Elastizitätsmodul, einer Fließgrenze, einer Härte, einer Duktilität oder einer Querkontraktion des ersten Fügepartners 1 und des zweiten Fügepartners 2 bestimmt werden. Auch Abweichungen in Kollisionsgeschwindigkeiten, die durch unzureichende Beschleunigungen, beispielsweise bei Spulendefekten, Generatordefekten oder zu wenig Explosivstoff vorkommen können, oder Störstoffe auf den zu fügenden Oberflächen können als Fehlerquellen bei der Schweißnahtbildung identifiziert werden. Schließlich erlaubt es die beschriebene Vorrichtung bzw. das beschriebene Verfahren auch, Abweichungen in den Oberflächeneigenschaften der Fügepartner 1, 2, wie Rauigkeiten oder Welligkeiten bzw. Temperaturabweichungen in einem Fügespalt zwischen dem ersten Fügepartner 1 und dem zweiten Fügepartner 2 während des Schweißvorgangs zu detektieren.

Hierbei wird ausgenutzt, dass ein Beginnzeitpunkt des Lichtblitzes mit dem Kollisionszeitpunkt korreliert, was beim Vergleich der Beginnzeitpunkte insbesondere bei einem Einsatz von räumlich verteilten Detektoren 19 und 20 Asymmetrien oder Verschiebungen aufdeckt. Die Intensität und Dauer des detektierten Lichtblitzes korreliert mit der Aufprallgeschwindigkeit der beteiligten Fügepartner 1 und 2, wobei eine passende Aufprallgeschwindigkeit wesentlich für eine korrekte Schweißnahtausbildung ist. Fremdkörper auf der Oberfläche, wie beispielsweise Öl können die Dauer des Lichtblitzes drastisch verkürzen und somit ein Schweißen verhindern. Ebenso können Oberflächenstörungen , wie bespielsweise Rauheiten die Intensität negativ beeinflussen.

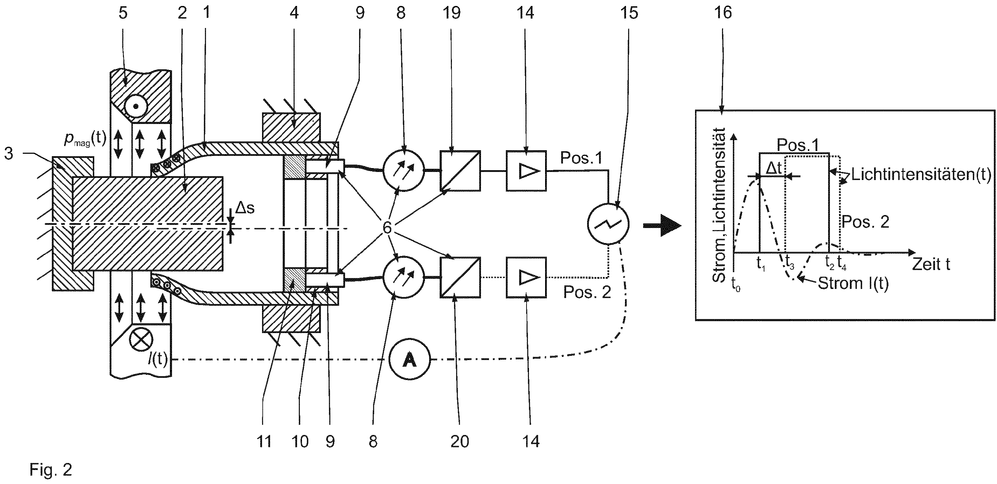

In Figur 2 ist in einer schematischen Ansicht eine Vorrichtung zum Magnetpulsschweißen dargestellt. Wiederkehrende Merkmale sind in dieser Zeichnung wie auch in den folgenden Zeichnungen jeweils mit identischen Bezugszeichen versehen. Der erste Fügepartner 1, der mit ebener oder gewölbter Oberfläche vorliegt und lokal oder global verformt bzw. bewegt werden soll, wird in einer ersten Fixierung 4 gehalten. Ebenso wird der zweite Fügepartner 2, der ebenfalls mit ebener oder gewölbter Oberfläche vorliegt und lokal oder global verformt bzw. bewegt werden soll, von einer zweiten Fixierung 3 gehalten.

Ein Beschleunigungswerkzeug der Schweißeinheit 5 mit definiertem Prozessstartzeitpunkt liegt in dem dargestellten Ausführungsbeispiel in Form einer stromdurchflossenen Werkzeugspule vor. Die zeitaufgelöst messende optische Aufnahmeeinheit 6 ist im dargestellten Ausführungsbeispiel ein Fotodetektor, also ein optoelektrischer Wandler, der je nach Anwendungsfall empfindlich für verschiedene Wellenlängen des elektromagnetischen Spektrum sein kann. Im dargestellten Ausführungsbeispiel ist die optische Aufnahmeeinheit 6 durch zwei Detektoren 19 und 20 gegeben, die jeweils über einen Lichtwellenleiter 8 mit optischen Anschluss an dem Detektor 19, 20 zu einer Sammellinse 9 führen. Durch die zwei Detektoren 19, 20 und die Sammellinsen 9, von denen in weiteren Ausführungsbeispielen auch mehr als zwei existieren und über einen Umfang bzw. eine Länge verteilt sein können, kann der beim Schweißen stattfindende Lichtblitz erfasst werden. Hierzu sind die Sammellinsen 9 in einer Fixierung 10 ohne Beeinflussung der Fügezone gehalten. Bei dem in Figur 2 dargestellten Ausführungsbeispiel ist darüberhinaus ein Schutzglas 11 vor den Sammellinsen 9 vorgesehen. Die optische Aufnahmeeinheit 6 wird in dem in Figur 2 gezeigten Ausführungsbeispiel somit durch die Sammellinsen 9, die Lichtwellenleiter 8 und die Detektoren 19 und 20 gebildet.

Ein von der optischen Aufnahmeeinheit 6 detektiertes Signal wird durch eine jedem der Detektoren nachgeschaltete elektrische Verstärkerschaltung 14 an ein Aufzeichnungsgerät 15, im dargestellten Ausführungsbeispiel ein Oszilloskop, weitergeleitet, das einen zeitlichen Nullpunkt benötigt (z.B. ein Beginn eines elektrischen Stromflusses in der Spule oder ein Zündzeitpunkt) und im dargestellten Ausführungsbeispiel eine Lichtintensität in Relation zu diesem Nullpunkt t₀ aufzeichnet. In der Auswerteeinheit 16 werden nachfolgend der Beginn, die Dauer und die Intensität des Lichtblitzes mit vorab definierten Soll-Werten verglichen. Bei dem in Figur 2 dargestellten Ausführungsbeispiel ist in dem dargestellten Diagramm ein elektrischer Spulenstrom über der Zeit dargestellt, wobei an Position 1 zum Zeitpunkt t₃ der Beginn und zum Zeitpunkt t₄ das Ende des Lichtblitzes gemessen wird und an Position 2 durch den zweiten Detektor zum Zeitpunkt t₁ der Beginn und zum Zeitpunkt t₂ das Ende des Lichtblitzes detektiert wird. Da der Zeitpunkt t₁ vor dem Zeitpunkt t₃ liegt, wird im dargestellten Fall auf eine Fehlpositionierung geschlossen.

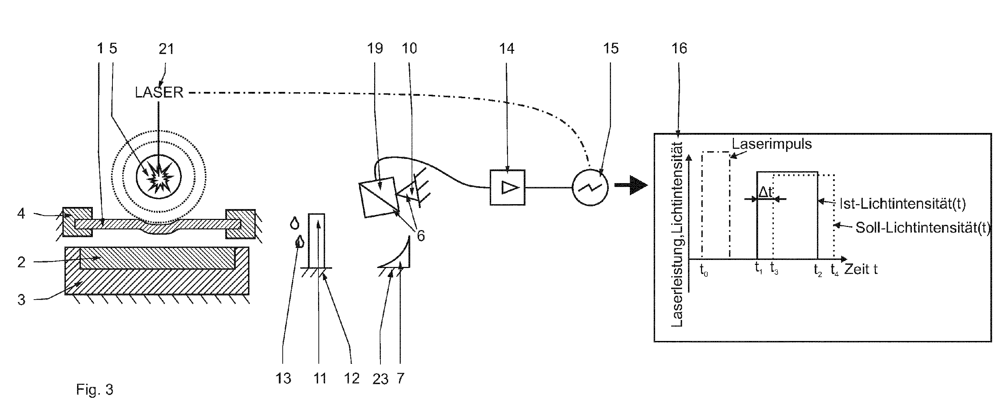

Figur 3 zeigt in einer schematischen Ansicht ein Laseraufprallschweißverfahren. Der erste Fügepartner 1 und der zweite Fügepartner 2 werden wiederum in ihren Fixierungen 3 und 4 gehalten, nun wird jedoch durch einen Laserstrahl 21 der Energieeintrag zur Verformung und zum Verschweißen bereitgestellt. In dem dargestellten Ausführungsbeispiel ist wiederum eine optische Aufnahmeeinheit 6 vorgesehen, deren einziger Detektor 19 nun jedoch vor einem ebenen oder gekrümmten Umlenkspiegel 7 mit Befestigung 23 bzw. einer ebenen oder gekrümmten reflektierenden Bauteiloberfläche zur Reflektion der Lichtentladung bzw. des Lichtblitzes in Richtung der optischen Aufnahmeeinheit 6 angeordnet ist, um die Intensität des Lichtblitzes möglichst vollständig zu erfassen. Hierzu ist die Aufnahmeeinheit 6 mit der Fixierung 10 versehen. In dem dargestellten Ausführungsbeispiel ist ein Schutzglas 12 ohne Beeinflussung der Fügezone vorgesehen, das mit einer Schutzglasreinigung 13 versehen ist, die beispielsweise kontinuierlich durch Druckluft bzw. eine Spülung oder in Intervallen durch einen Pinsel, einen Druckluftstoß oder ein Spülmittelstoß bereinigt wird. In der Auswerteeinheit 16, beispielsweise einem Computer, erfolgt wiederum ein Vergleich der Soll-Werte und der IstWerte. Im dargestellten Ausführungsbeispiel wird zum Zeitpunkt t₀ ein Laserimpuls registriert und zum Zeitpunkt t₁ ein Beginn des Lichtblitzes. Da der SollWert des Lichtblitzes allerdings bei t₃ liegt, und somit die Abweichung größer als erlaubt ist, kann auf abweichende mechanische Eigenschaften des jeweiligen Fügepartners von den vorgesehenen mechanischen Eigenschaften geschlossen werden.

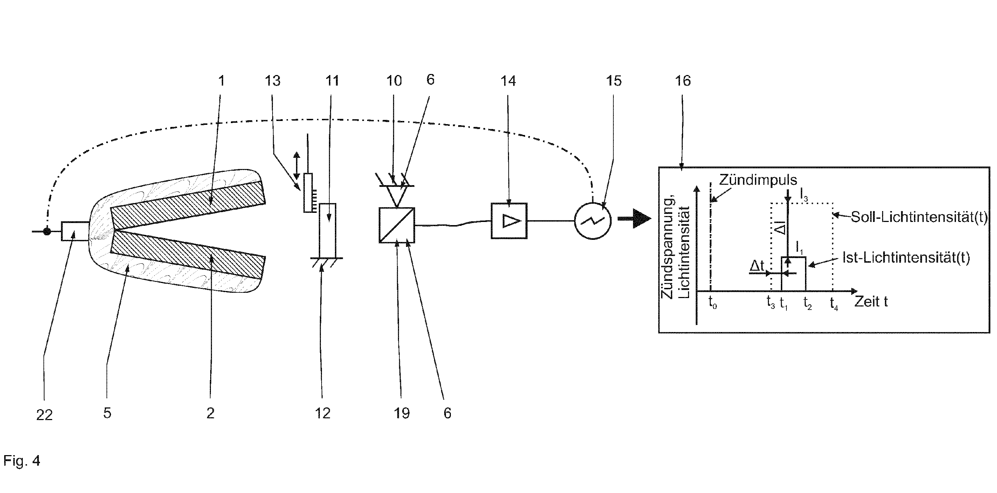

Figur 4 zeigt eine Vorrichtung zum Sprengschweißen, bei der Sprengstoff über einen Zünder 22 ausgelöst wird, so dass der erste Fügepartner 1 und der zweite Fügepartner 2 aufeinander zu bewegt werden. Die elektronische Auswertung erfolgt wie in den zuvor beschriebenen Beispielen, wobei in der Auswerteeinheit 16 nun zum Zeitpunkt t₀ die Zündung detektiert wird. Die Dauer des Lichtblitzes als Soll-Wert soll in diesem Fall den zeitlichen Abstand zwischen t₃ und t₄ umfassen und der Lichtblitz sollte eine Intensität I₃ aufweisen, allerdings wird in dem dargestellten Ausführungsbeispiel als Ist-Wert nur eine Länge von t₁ bis t₂ und eine Intensität I₁ gemessen. Da die Intensität I₁ kleiner als I₃ ist und die gemessene zeitliche Intensitätsverteilung insgesamt nicht mit der erwarteten zeitlichen Intensitätsverteilung übereinstimmt, liegt eine zu geringe Aufprallgeschwindigkeit vor, so dass auf eine falsche Dosierung des explosiven Mediums geschlossen werden kann.

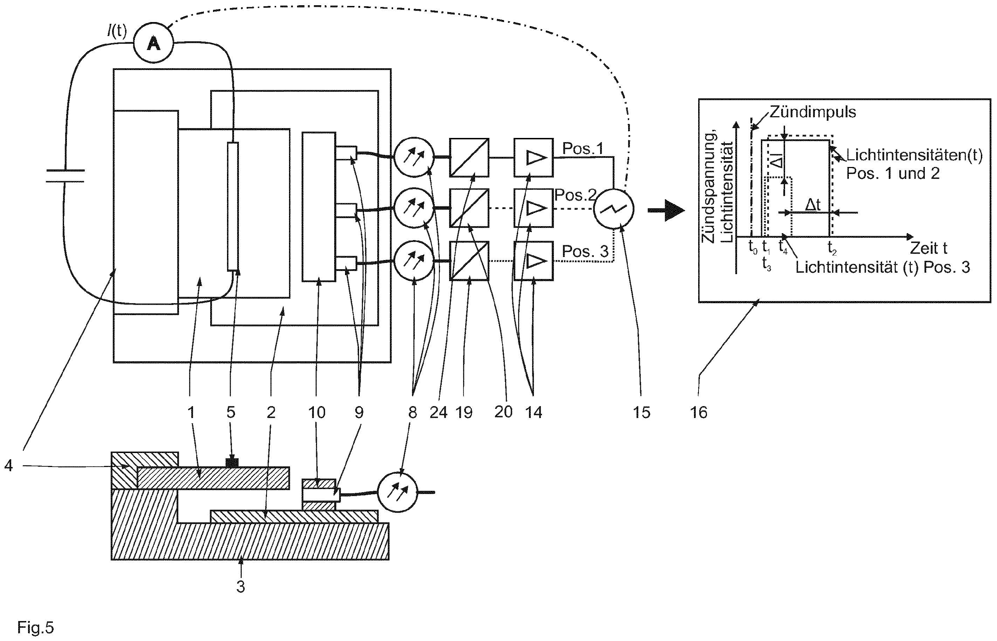

Schließlich wird in Figur 5 eine schematische Darstellung eines Schweißvorgangs durch Bauteilbeschleunigung mittels vaporisierender Folien gezeigt. Im unteren Teil der Figur 5 ist die Anordnung in einer seitlichen Ansicht dargestellt, während im oberen Teil eine Draufsicht der gleichen Anordnung zu sehen ist. In der gezeigten Anordnung werden nun insgesamt drei Detektoren 19, 20 und 24 der optischen Aufnahmeeinheit 6 verwendet, so dass an drei Positionen der Lichtblitz detektiert wird. Zudem umfasst die optische Aufnahmeeinheit die Lichtwellenleiter 8 und die Sammellinsen 9. Bei derartigen Verfahren mit vaporisierenden Folien wird durch einen pulsartigen elektrischen Strom ein Draht durch Widerstandserwärmung erhitzt und vollständig verdampft, so dass der erste Fügepartner 1 durch den Druck des verdampfenden Drahts in Richtung des zweiten Fügepartners 2 beschleunigt wird. Zu einem Zeitpunkt t₀ erfolgt die Zündung, wobei nun anhand des Diagrammes in der Auswerteeinheit 16 festgestellt wird, dass der an Position 3 befindliche Detektor einen zu kurzen Lichtblitz detektiert, der allerdings zum korrekten Zeitpunkt beginnt. Dies weist auf Störstoffe bzw. Rauheiten oder eine zu niedrige Temperatur im Fügespalt hin. In weiteren Ausführungsformen kann auch jeder der verwendeten Detektoren zum Detektieren nur eines der genannten vier Maße ausgebildet sein, also beispielsweise der Detektor 19 den Beginn des Lichtblitzes detektieren, der Detektor 20 die Dauer des Lichtblitzes und der Detektor 24 die zeitliche Intensitätsverteilung des Lichtblitzes.

## Patentansprüche

1. Verfahren zur Prozessüberwachung bei einer mittels Kollisionsschweißen gebildeten Schweißnaht, bei dem
ein erster Fügepartner (1) und ein zweiter Fügepartner (2) durch einen Energieeintrag aufeinander zu beschleunigt und unter Ausbilden der Schweißnaht miteinander verschweißt werden, **dadurch gekennzeichnet, dass**
durch eine zeitaufgelöst messende optische Aufnahmeeinheit (6) mit mindestens einem Detektor (19, 20, 24) beim Verschweißen ein durch elektromagnetische Strahlung eines kurzzeitigen, heißen und dichten Plasmas gefolgt von länger andauernder elektromagnetischer Strahlung eines aus einer Fügezone expandierenden Gases gemischt mit glühend leuchtenden Bestandteilen des ersten Fügepartners (1) und des zweiten Fügepartners (2) verursachter Lichtblitz zwischen dem ersten Fügepartner (1) und dem zweiten Fügepartner (2) detektiert wird und
durch eine Auswerteeinheit (16) ein Istwert eines Beginns des Lichtblitzes, einer Dauer des Lichtblitzes, einer Intensität des Lichtblitzes und/oder einer zeitliche Intensitätsverteilung des Lichtblitzes ermittelt wird/werden und
mit einem jeweiligen Sollwert des Beginns des Lichtblitzes, der Dauer des Lichtblitzes, der Intensität des Lichtblitzes und/oder einer zeitlichen Intensitätsverteilung des Lichtblitzes verglichen wird/werden, wobei nur bei Einhaltung einer maximalen Abweichung des Istwerts von dem Sollwert die Schweißnaht als qualitativ ausreichend klassifiziert wird.

2. Verfahren nach Anspruch 1, **dadurch gekennzeichnet, dass** durch eine Sortiereinheit (17) nur Bauteile mit einer als qualitativ ausreichend klassifizierten Schweißnaht einer weiteren Verarbeitung zugeführt werden.

3. Verfahren nach Anspruch 1 oder Anspruch 2, **dadurch gekennzeichnet, dass** als das Kollisionsschweißen, Magnetpulsschweißen, Sprengschweißen, Wasserstrahl-Punkt-Schweißen, Schweißen durch Fügepartnerbeschleunigung mittels vaporisierender Folien und/oder Schweißen durch Fügepartnerbeschleunigung mittels laserinduzierter Schockwellen durchgeführt wird.

4. Verfahren nach einem der vorhergehenden Ansprüche, **dadurch gekennzeichnet, dass** die Abweichung des Istwerts vom Sollwert vorgegeben wird oder über ein statistisches Maß, vorzugsweise über die Standardabweichung, anhand mehrerer durchgeführter und qualitativ bewerteter Schweißvorgänge festgelegt wird.

5. Verfahren nach einem der vorhergehenden Ansprüche, **dadurch gekennzeichnet, dass** der Lichtblitz von mindestens zwei Detektoren der optischen Aufnahmeeinheit (6) aus mindestens zwei verschiedenen Raumpositionen erfasst wird, wobei nur bei Einhaltung einer maximalen Abweichung des Istwerts von dem Sollwert an allen Detektoren die Schweißnaht als qualitativ ausreichend klassifiziert wird.

6. Vorrichtung zur Prozessüberwachung bei einer mittels Kollisionsschweißen gebildeten Schweißnaht, mit
einer Schweißeinheit (5) zum Beschleunigen und Verschweißen eines ersten Fügepartners (1) und eines zweiten Fügepartners (2) durch einen Energieeintrag unter Ausbilden der Schweißnaht, **dadurch gekennzeichnet, dass** die Vorrichtung folgende Merkmale aufweist:
eine zeitaufgelöst messende optische Aufnahmeeinheit (6) mit mindestens einem Detektor (19, 20, 24) zum Detektieren eines beim Verschweißen durch elektromagnetische Strahlung eines kurzzeitigen, heißen und dichten Plasmas gefolgt von länger andauernder elektromagnetischer Strahlung eines aus einer Fügezone expandierenden Gases gemischt mit glühend leuchtenden Bestandteilen des ersten Fügepartners (1) und des zweiten Fügepartners (2) generierten Lichtblitzes zwischen dem ersten Fügepartner (1) und dem zweiten Fügepartner (2) und
eine Auswerteeinheit (16) zum Ermitteln eines Istwerts eines Beginns des Lichtblitzes, einer Dauer des Lichtblitzes, einer Intensität des Lichtblitzes und/oder einer zeitlichen Intensitätsverteilung des Lichtblitzes und
zum Vergleichen des jeweiligen ermittelten Istwerts mit einem jeweiligen Sollwert des Beginns des Lichtblitzes, der Dauer des Lichtblitzes, der Intensität des Lichtblitzes und/oder einer zeitlichen Intensitätsverteilung des Lichtblitzes, wobei die Auswerteeinheit (16) eingerichtet ist, nur bei Einhalten einer maximalen Abweichung des Istwerts von dem Sollwert die Schweißnaht als qualitativ ausreichend zu klassifizieren.

7. Vorrichtung nach Anspruch 6, **dadurch gekennzeichnet, dass** eine Sortiereinheit (17) vorgesehen ist, die ausgebildet ist, nur Bauteile mit einer als qualitativ ausreichend klassifizierten Schweißnaht einer weiteren Verarbeitung zuzuführen.

8. Vorrichtung nach Anspruch 6 oder Anspruch 7, **dadurch gekennzeichnet, dass** die optische Aufnahmeeinheit (6) mit einer Bildaufzeichnungsfrequenz von mindestens 1 MHz ausgebildet ist.

9. Vorrichtung nach einem der Ansprüche 6 bis 8, **dadurch gekennzeichnet, dass** die optische Aufnahmeeinheit (6) als eine Fotozelle, ein Fotomultiplier, eine Fotodiode, ein Fototransistor und/oder ein Fotowiderstand ausgebildet ist.

10. Vorrichtung nach einem der Ansprüche 6 bis 9, **dadurch gekennzeichnet, dass** die optische Aufnahmeeinheit (6) mindestens zwei Detektoren aufweist, die ausgebildet sind, den Lichtblitz aus mindestens zwei verschiedenen Raumpositionen zu erfassen, wobei die Auswerteeinheit (16) eingerichtet ist, nur bei Einhaltung einer maximalen Abweichung des Istwerts von dem Sollwert an der Mehrzahl, bevorzugt allen der Detektoren die Schweißnaht als qualitativ ausreichend zu klassifizieren.

## Claims

1. Method for monitoring the process for a welding seam formed by means of collision welding, in which
a first joining partner (1) and a second joining partner (2) are accelerated towards one another by an introduction of energy and are welded to one another forming a welding seam, **characterized in that**
by means of an optical recording unit (6) with at least one detector (19, 20, 24) that takes time-resolved measurements, during the welding process, a flash of light caused by the electromagnetic radiation of a short-term, hot and dense plasma, followed by longer-lasting electromagnetic radiation of a gas expanding out of a joining zone, mixed with incandescent constituents of the first joining partner (1) and of the second joining partner (2), is detected between the first joining partner (1) and the second joining partner (2) and
an actual value of a start of the light flash, a duration of the light flash, an intensity of the light flash and/or an intensity distribution over time of the light flash is/are determined by an evaluation unit (16) and
compared with a respective target value of the start of the light flash, the duration of the light flash, the intensity of the light flash and/or an intensity distribution over time of the light flash, wherein the welding seam is classified as being of sufficient quality only if a maximum deviation of the actual value from the target value is maintained.

2. Method according to claim 1, **characterized in that** only components with a welding seam classified as being of sufficient quality are supplied for further processing by a sorting unit (17).

3. Method according to claim 1 or claim 2, **characterized in that** magnetic pulse welding, explosion welding, waterjet spot welding, welding by joining partner acceleration by means of vaporizing foils and/or welding by joining partner acceleration by means of laser-induced shock waves is carried out as the collision welding.

4. Method according to any one of the preceding claims, **characterized in that** the deviation of the actual value from the target value is predetermined or is established via a statistical measure, preferably via the standard deviation, on the basis of a plurality of welding processes which are carried out and evaluated in terms of quality.

5. Method according to any one of the preceding claims, **characterized in that** the light flash is detected by at least two detectors of the optical recording unit (6) from at least two different spatial positions, wherein the welding seam is only classified as being of sufficient quality if a maximum deviation of the actual value from the target value is maintained at all detectors.

6. Device for monitoring the process for a welding seam formed by means of collision welding, having
a welding unit (5) for accelerating and welding a first joining partner (1) and a second joining partner (2) by an introduction of energy to form the welding seam, **characterized in that** the device has the following features:
an optical recording unit (6) with at least one detector (19, 20, 24) that takes time-resolved measurements for detecting a light flash generated during welding by electromagnetic radiation of a short-term, hot and dense plasma, followed by longer-lasting electromagnetic radiation of a gas expanding out of a joining zone, mixed with incandescent constituents of the first joining partner (1) and the second joining partner (2), between the first joining partner (1) and the second joining partner (2), and
an evaluation unit (16) for determining an actual value of a start of the light flash, a duration of the light flash, an intensity of the light flash and/or an intensity distribution over time of the light flash, and
for comparing the respective determined actual value with a respective target value of the start of the light flash, the duration of the light flash, the intensity of the light flash, and/or an intensity distribution over time of the light flash, wherein the evaluation unit (16) is configured to classify the welding seam as being of sufficient quality only if a maximum deviation of the actual value from the target value is maintained.

7. Device according to claim 6, **characterized in that** a sorting unit (17) is provided, which is configured to supply only components with a welding seam classified as being of sufficient quality for further processing.

8. Device according to claim 6 or claim 7, **characterized in that** the optical recording unit (6) is configured to have an image recording frequency of at least 1 MHz.

9. Device according to any one of claims 6 to 8, **characterized in that** the optical recording unit (6) is configured as a photocell, a photomultiplier, a photodiode, a phototransistor, and/or a photoresistor.

10. Device according to any one of claims 6 to 9, **characterized in that** the optical recording unit (6) has at least two detectors, which are configured to capture the light flash from at least two different spatial positions, wherein the evaluation unit (16) is configured to classify the welding seam as being of sufficient quality only if a maximum deviation of the actual value from the target value is maintained at the majority, preferably all of the detectors.

## Revendications

1. Procédé de surveillance de processus lors de la formation d'un cordon de soudure formé par soudage par choc, dans lequel
un premier partenaire d'assemblage (1) et un second partenaire d'assemblage (2) sont accélérés l'un vers l'autre par un apport d'énergie et sont soudés l'un avec l'autre pour former le cordon de soudure, **caractérisé en ce que**
par l'intermédiaire d'une unité d'acquisition optique (6), mesurant via résolution temporelle, comportant au moins un détecteur (19, 20, 24), un éclair lumineux est détecté, lors du soudage, entre le premier partenaire d'assemblage (1) et le second partenaire d'assemblage (2), provoqué par un rayonnement électromagnétique d'un plasma à court terme, chaud et dense, suivi d'un rayonnement électromagnétique prolongé d'un gaz se dilatant à partir d'une zone d'assemblage mélangé avec des composants incandescents entre le premier partenaire d'assemblage (1) et le second partenaire d'assemblage (2) et
une valeur réelle d'un commencement de l'éclair lumineux, d'une durée de l'éclair lumineux, d'une intensité de l'éclair lumineux et/ou d'une répartition d'intensité dans le temps de l'éclair lumineux est/sont déterminée(s) au moyen d'une unité d'évaluation (16) et
avec une valeur de consigne respective du commencement de l'éclair lumineux, de la durée de l'éclair lumineux, de l'intensité de l'éclair lumineux et/ou d'une répartition d'intensité dans le temps de l'éclair lumineux, dans lequel le cordon de soudure est classé comme qualitativement suffisant uniquement si un écart maximal de la valeur réelle par rapport à la valeur de consigne est respecté.

2. Procédé selon la revendication 1, **caractérisé en ce que** par l'intermédiaire d'une unité de tri (17), seuls des composants ayant un cordon de soudure classé comme étant de qualité suffisante sont soumis à un traitement ultérieur.

3. Procédé selon la revendication 1 ou la revendication 2, **caractérisé en ce qu'**en tant que soudage par choc, un soudage par impulsions magnétiques, un soudage par explosion, un soudage par points au jet d'eau, un soudage par accélération de partenaire d'assemblage au moyen de films de vaporisation et/ou un soudage par accélération de partenaire d'assemblage au moyen d'ondes de choc induites par laser est effectué.

4. Procédé selon l'une quelconque des revendications précédentes, **caractérisé en ce que** l'écart entre la valeur réelle et la valeur de consigne est prédéfini ou est déterminé via une mesure statistique, de préférence via l'écart type, à l'aide de plusieurs processus de soudage effectués et évalués sur le plan qualitatif.

5. Procédé selon l'une quelconque des revendications précédentes, **caractérisé en ce que** l'éclair lumineux est détecté par au moins deux détecteurs de l'unité d'acquisition optique (6) à partir d'au moins deux positions spatiales différentes, dans lequel le cordon de soudure est classé comme qualitativement suffisant uniquement si un écart maximal de la valeur réelle par rapport à la valeur de consigne est observé au niveau de tous les détecteurs.

6. Dispositif de surveillance de processus lors de la formation d'un cordon de soudure formé par soudage par choc, comprenant
une unité de soudage (5) pour accélérer et souder un premier partenaire d'assemblage (1) et un second partenaire d'assemblage (2) par un apport d'énergie en formant le cordon de soudure, **caractérisé en ce que** le dispositif présente les caractéristiques suivantes :
une unité d'acquisition optique (6), mesurant via résolution temporelle, comportant au moins un détecteur (19, 20, 24), pour détecter un éclair lumineux, lors du soudage, entre le premier partenaire d'assemblage (1) et le second partenaire d'assemblage (2), provoqué par un rayonnement électromagnétique d'un plasma à court terme, chaud et dense, suivi d'un rayonnement électromagnétique prolongé d'un gaz se dilatant à partir d'une zone d'assemblage mélangé avec des composants incandescents entre le premier partenaire d'assemblage (1) et le second partenaire d'assemblage (2) et
une unité d'évaluation (16) pour déterminer une valeur réelle d'un commencement de l'éclair lumineux, une durée de l'éclair lumineux, une intensité de l'éclair lumineux et/ou une répartition d'intensité dans le temps de l'éclair lumineux et
pour comparer la valeur réelle déterminée respective avec une valeur de consigne respective du commencement de l'éclair lumineux, de la durée de l'éclair lumineux, de l'intensité de l'éclair lumineux et/ou d'une répartition d'intensité dans le temps de l'éclair lumineux, dans lequel l'unité d'évaluation (16) est conçue pour classer le cordon de soudure comme qualitativement suffisant uniquement en cas de respect d'un écart maximal de la valeur réelle par rapport à la valeur de consigne.

7. Dispositif selon la revendication 6, **caractérisé en ce qu'**une unité de tri (17) est prévue, qui est conçue pour soumettre à un traitement ultérieur uniquement des composants avec un cordon de soudure classé comme qualitativement suffisant.

8. Dispositif selon la revendication 6 ou la revendication 7, **caractérisé en ce que** l'unité d'acquisition optique (6) est conçue avec une fréquence d'enregistrement d'image d'au moins 1 MHz.

9. Dispositif selon l'une quelconque des revendications 6 à 8, **caractérisé en ce que** l'unité d'acquisition optique (6) est réalisée sous la forme d'une cellule photoélectrique, d'un photomultiplicateur, d'une photodiode, d'un phototransistor et/ou d'une photorésistance.

10. Dispositif selon l'une quelconque des revendications 6 à 9, **caractérisé en ce que** l'unité d'acquisition optique (6) présente au moins deux détecteurs qui sont conçus pour détecter l'éclair lumineux à partir d'au moins deux positions spatiales différentes, dans lequel l'unité d'évaluation (16) est conçue pour classer le cordon de soudure comme qualitativement suffisant uniquement si un écart maximal de la valeur réelle par rapport à la valeur de consigne est respecté au niveau de la pluralité de détecteurs, de préférence au niveau de tous.
